(19)

Europäisches
Patentamt
European
Patent Office
Office européen
des brevets

(11) **EP 4 213 410 A1**

(12) **EUROPEAN PATENT APPLICATION**

(43) Date of publication:
**19.07.2023 Bulletin 2023/29**

(21) Application number: **22203261.7**

(22) Date of filing: **24.10.2022**

(51) International Patent Classification (IPC):
*H04B 7/185* (2006.01)     *H04W 56/00* (2009.01)
*H04W 74/08* (2009.01)

(52) Cooperative Patent Classification (CPC):
**H04B 7/18513; H04B 7/18543; H04W 56/0045;
H04W 74/0833;** H04W 74/006

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.01.2022 KR 20220004879**

(71) Applicant: **LG Electronics, Inc.**
**Yeongdeungpo-gu**
**Seoul 07336 (KR)**

(72) Inventors:
• **SHIN, Seokmin**
**Seoul 06772 (KR)**
• **PARK, Haewook**
**Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND APPARATUS FOR PERFORMING RANDOM ACCESS PROCEDURE IN WIRELESS COMMUNICATION SYSTEM**

(57)     A method and an apparatus for performing a random access procedure in a wireless communication system are disclosed. A method of performing a random access procedure according to an embodiment of the present disclosure may include receiving, from a base station, configuration information for providing information needed for the terminal to access the wireless communication system via a non-terrestrial network (NTN) including a satellite, wherein the configuration information includes first information for adjusting an orbit of the satellite and second information on common timing advance (TA); and determining a terminal-specific TA value for the terminal based on a location of the terminal and the configuration information; and transmitting, to the base station, a first message for the random access procedure at a timing determined based on the terminal-specific TA value and a common TA value derived from the second information.

EP 4 213 410 A1

**Description**

**TECHNICAL FIELD**

The present disclosure relates to a wireless communication system, and in more detail, relates to a method and an apparatus of performing a random access procedure in a wireless communication system.

**BACKGROUND**

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

**SUMMARY**

A technical object of the present disclosure is to provide an uplink transmission/reception method via a non-terrestrial network (NTN), in particular, an uplink transmission/reception method and apparatus in a random access procedure.

In addition, an additional technical object of the present disclosure is to provide a method and an apparatus for signaling and updating orbit information (ephemeris) of a satellite in an NTN.

In addition, an additional technical object of the present disclosure is to provide a method and apparatus for uplink transmission/reception based on timing information obtained through orbit information (ephemeris) of a satellite in the NTN.

The technical objects to be achieved by the present disclosure are not limited to the above-described technical objects, and other technical objects which are not described herein will be clearly understood by those skilled in the pertinent art from the following description.

A method of performing a random access procedure in a wireless communication system according to an aspect of the present disclosure may include: receiving, from a base station, configuration information for providing information needed for the terminal to access the wireless communication system via a non-terrestrial network (NTN) including a satellite, wherein the configuration information includes first information for adjusting an orbit of the satellite and second information on common timing advance (TA); and determining a terminal-specific TA value for the terminal based on a location of the terminal and the configuration information; and transmitting, to the base station, a first message for the random access procedure at a timing determined based on the terminal-specific TA value and a common TA value derived from the second information.

A method of performing a random access procedure in a wireless communication system according to an aspect of the present disclosure may include: transmitting, to a terminal, configuration information for providing information needed for the terminal to access the wireless communication system via a non-terrestrial network (NTN) including a satellite, wherein the configuration information includes first information for adjusting an orbit of the satellite and second information on common timing advance (TA); and receiving, from the terminal, a first message for the random access procedure at a timing determined based on a terminal-specific TA value and a common TA value derived from the second information. The terminal-specific TA value may be determined by the terminal based on a location of the terminal and the configuration information.

According to an embodiment of the present disclosure, a more accurate satellite orbit can be obtained/derived by signaling and updating orbit information (ephemeris) of the satellite in the NTN.

In addition, according to an embodiment of the present disclosure, by acquiring/deriving a more accurate satellite orbit, it may be possible to more stably transmit/receive uplink through NTN.

Effects achievable by the present disclosure are not limited to the above-described effects, and other effects which are not described herein may be clearly understood by those skilled in the pertinent art from the following description.

## BRIEF DESCRIPTION OF THE DRAWINGS

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a 5G satellite access network connected to a 5G RAN and a 5G core network to which the present disclosure may be applied.
FIG. 8 a diagram illustrating a non-terrestrial network to which the present disclosure may be applied.
FIG. 9 illustrates a timing advance component in a wireless communication system to which the present disclosure may be applied.
FIG. 10 illustrates a random access procedure in a wireless communication system to which the present disclosure may be applied.
FIG. 11 illustrates a two-step random access process in a wireless communication system to which the present disclosure may be applied.
FIG. 12 is a diagram for explaining a Kepler orbital element.
FIG. 13 illustrates a signaling method for an uplink transmission/reception method according to an embodiment of the present disclosure.
FIG. 14 is a diagram illustrating an operation of a terminal in an uplink transmission/reception method according to an embodiment of the present disclosure.
FIG. 15 is a diagram illustrating an operation of a base station in an uplink transmission/reception method according to an embodiment of the present disclosure.
FIG. 16 illustrates a block diagram of a wireless communication device according to an embodiment of the present disclosure.

## DETAILED DESCRIPTION

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS (Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing

- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

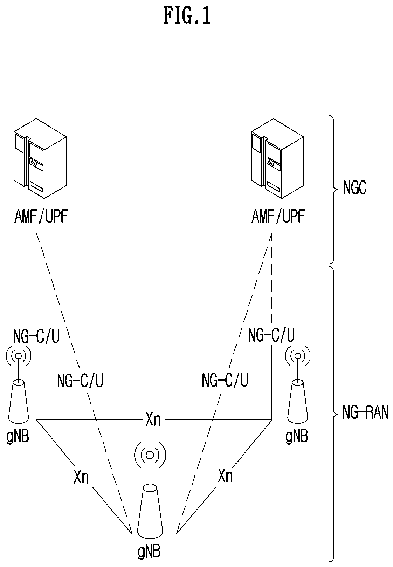

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

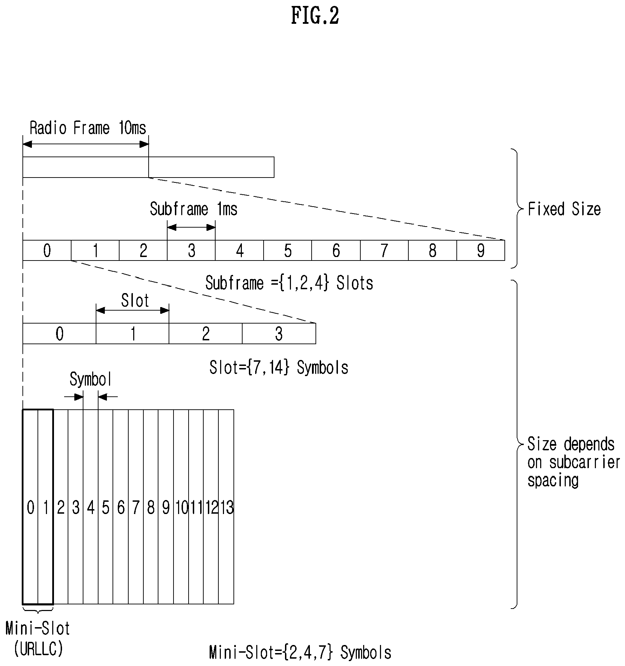

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^\mu \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f/100) \cdot T_c = 10$ms. Here, a radio frame is configured with 10 subframes having a duration of $T_{sf} = (\Delta f_{max} N_f/1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^\mu \in \{0,..., N_{slot}^{subframe,\mu}-1\}$ in a subframe and are numbered in an increasing order of $n_{s,f}^\mu \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

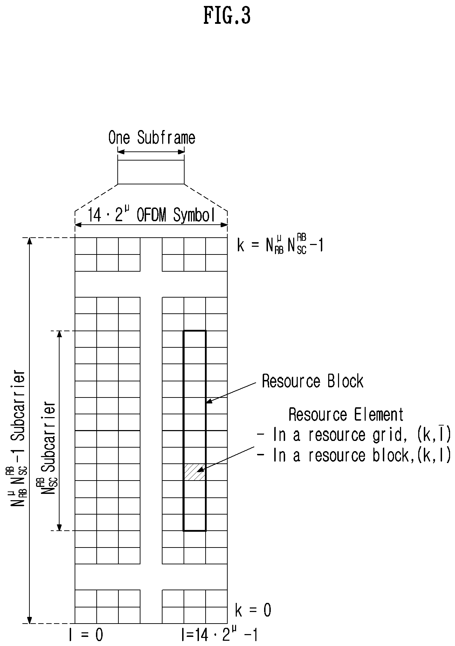

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, $k=0,..., N_{RB}^{\mu}N_{sc}^{RB}-1$ is an index in a frequency domain and $l'=0,..., 2^{\mu}N_{symb}^{(\mu)}-1$ refers to a position of a symbol in a subframe. When referring to a resource element in a slot, an index pair (k,l) is used. Here, $l=0,..., N_{symb}^{\mu}-1$. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the

following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

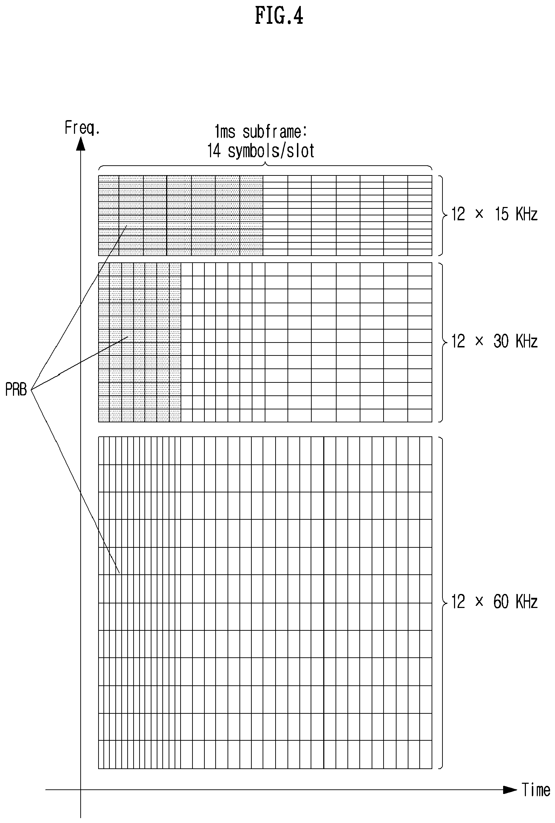

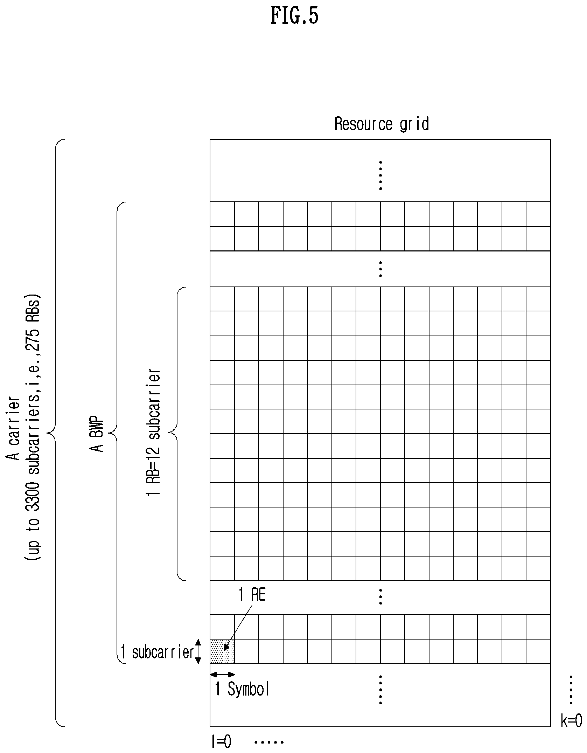

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE (Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

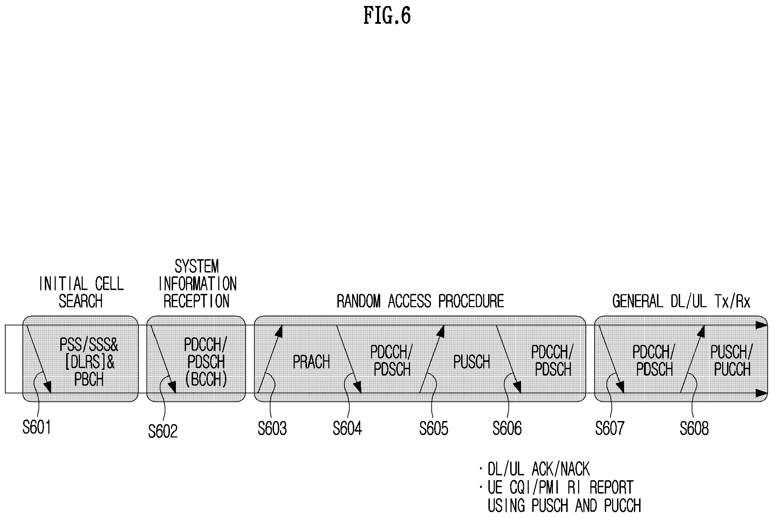

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Non-terrestrial network (NTN) operation

Non-terrestrial network (NTN) refers to a network or network segment using radio frequency (RF) resources mounted on a satellite (e.g., geostationary earth orbit (GEO) satellite, low-earth orbit (LEO: Low-Earth Orbit) satellite, etc.) (or unmanned aircraft system (UAS) platform).

Based on an NTN network, coverage may be extended and a highly reliable network service may be possible. For example, an NTN may be configured alone, or may be combined with an existing terrestrial network to form a wireless communication system. For example, in an NTN network, i) a link between a satellite and a UE, ii) a link between satellites, and iii) a link between a satellite and a gateway may be configured.

The following terms may be used to describe the configuration of a wireless communication system using a satellite.

- Satellite: A space-borne vehicle that embarks a bent pipe payload or regenerative payload communication transmitter deployed in a Low-Earth Orbit (LEO), usually at altitudes between 500 km and 2000 km, a Medium-Earth Orbit (MEO) at altitudes between 8000 km and 20000 km, or Geostationary satellite Earth Orbit (GEO) at altitude 35,786 km.
- Satellite network: A network or network segment that uses a space-borne vehicle to embark a transmission equipment relay node or base station.
- Satellite RAT: A RAT defined to support at least one satellite.
- 5G Satellite RAT: A Satellite RAT defined as part of a new radio.
- 5G satellite access network: A 5G access network using one or more satellites.
- Terrestrial: located on the Earth's surface.
- Terrestrial network: a network or segment of a network located on the Earth's surface.

A use case that can be provided in a communication system using a satellite connection may be divided into three categories. The "Service Continuity" category may be used to provide network connectivity in geographic areas where 5G services cannot be accessed through the wireless coverage of terrestrial networks. For example, A satellite connection can be used for UEs associated with pedestrian users, or for UEs on moving land-based platforms (e.g., cars, coaches, trucks, trains), air platforms (e.g., commercial or private jets) or sea platforms (e.g., sea vessels). For "Service Ubiquity" category, when terrestrial networks are unavailable (e.g., disaster, destruction, economic reasons, etc.), a satellite connection may be used for Internet of things (IOT)/public safety related emergency network/home access, etc. The "Service Scalability" category includes services using wide coverage of satellite networks.

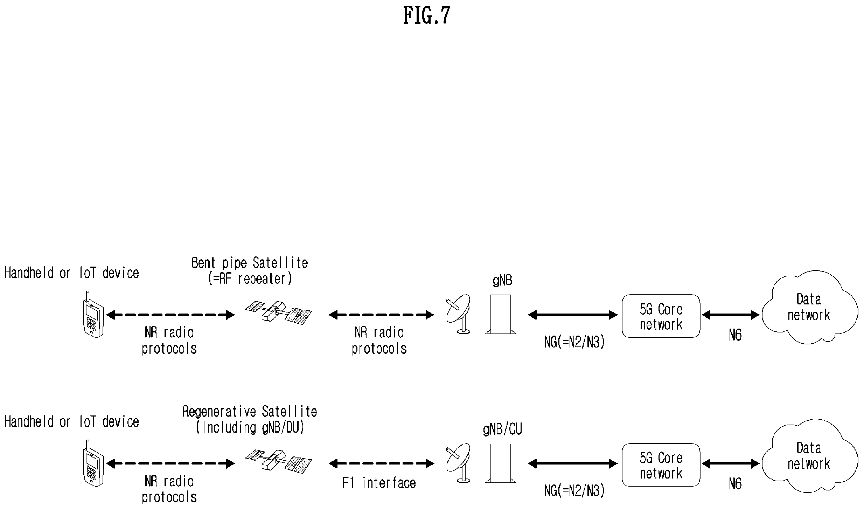

FIG. 7 illustrates a 5G satellite access network connected to a 5G RAN and a 5G core network to which the present disclosure may be applied.

For example, a 5G satellite access network may be connected to a 5G core network. In this case, a satellite may be a bent pipe satellite or a regenerative satellite. NR radio protocols may be used between a UE and a satellite. Also, an F1 interface may be used between a satellite and a gNB.

A network using a satellite may be used to perform the method/operations proposed in the present disclosure.

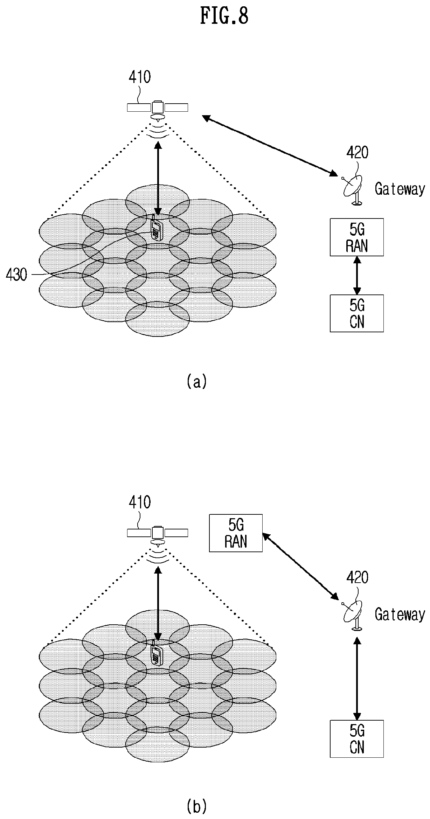

FIG. 8 a diagram illustrating a non-terrestrial network to which the present disclosure may be applied.

A non-terrestrial network (NTN) refers to a wireless network configured using a device that is not fixed on the ground, such as a satellite, and a representative example is a satellite network. Based on an NTN, coverage may be extended and a highly reliable network service may be possible. For example, an NTN may be configured alone, or may be combined with an existing terrestrial network to form a wireless communication system.

Referring to FIG. 8, an NTN may be configured to include one or more satellites 410, one or more NTN gateways 420 capable of communicating with the satellite, one or more UEs(/BSs) 430 capable of receiving mobile satellite services from the satellite, etc. In FIG. 8, an example of an NTN including satellite is mainly described for convenience of description, but the scope of the present disclosure is not limited. Therefore, an NTN may be configured to include not only the satellite, but also an aerial vehicle, an unmanned aerial vehicle system (UAS), a TUA (Tethered UAS), an LTA (Lighter than Air UAS), a HTA (Heaver than Air UAS), a HAP (High Altitude Platforms), etc.

The satellite 410 is a bent pipe payload or regenerative payload communication transmitter (telecommunication transmitter) equipped with a space-borne vehicle, and it may be located in a low earth orbit (LEO), a medium earth orbit (MEO), or a geostationary earth orbit (GEO). The NTN gateway 420 is an earth station or gateway that exists on the surface of the earth, and provides sufficient RF power/sensitivity to access the satellite. The NTN gateway corresponds to a transport network layer (TNL) node. The one or more UEs 430 may be connected to an NTN through a base station 430/satellite 410.

In an NTN network, i) a link between a satellite and a UE, ii) a link between satellites, iii) a link between a satellite and an NTN gateway, etc. may exist. A service link means a radio link between a satellite and a UE. Inter-satellite links (ISLs) between satellites may exist when multiple satellites exist. A feeder link refers to a radio link between an NTN gateway and a satellite (or UAS platform). A gateway may be connected to a data network (data network), and may perform transmission and reception with a satellite through a feeder link. A UE can transmit and receive via a satellite and a service link.

NTN operating scenarios may consider two scenarios based on a transparent payload and a regenerative payload, respectively.

FIG. 8(a) shows an example of a scenario based on a transparent payload. In a scenario based on a transparent payload, a signal repeated by a payload is not changed. The satellite 410 repeats an NR-Uu air interface from a feeder link to a service link (or vice versa), and a satellite radio interface (SRI) on a feeder link is NR-Uu. The NTN gateway 420 supports all functions necessary to transmit a signal of an NR-Uu interface. Also, different transparent satellites may be connected to the same terrestrial gNB.

FIG. 8(b) shows an example of a scenario based on a regenerative payload. In a scenario based on a regenerative payload, the satellite 410 can perform some or all of the functions of a conventional base station (e.g., gNB), so it refers to a scenario in which some or all of frequency conversion/demodulation/decoding/modulation is performed. A service link between a UE and a satellite uses an NR-Uu air interface, and a feeder link between an NTN gateway and a satellite uses a satellite radio interface (SRI). An SRI corresponds to a transport link between an NTN gateway and a satellite.

The UE 430 may be simultaneously connected to a 5GCN through an NTN-based NG-RAN and a conventional cellular NG-RAN. Alternatively, the UE may be simultaneously connected to a 5GCN via two or more NTNs (e.g., LEO NTN+GEO NTN, etc.).

As shown in Table 6, different types of satellites (or UAS platforms) may exist.

Table 6 illustrates the types of NTN platform.

[Table 6]

| Platforms | Altitude range | Orbit | Typical beam footprin t size |
|---|---|---|---|
| Low-Earth Orbit (LEO) satellite | 300 - 1500 km | Circular around the earth | 100 - 1000 km |
| Medium-Earth Orbit (MEO) satellite | 7000 - 25000 km | | 100 - 1000 km |
| Geostationary Earth Orbit (GEO) satellite | 35 786 km | notional station keeping position fixed in terms of elevation/azimuth with respect to a given earth point | 200 - 3500 km |
| UAS platform (including HAPS) | 8 - 50 km (20 km for HAPS) | | 5 - 200 km |
| High Elliptical Orbit (HEO) satellite | 400 - 50000 km | Elliptical around the earth | 200 - 3500 km |

Typically, a GEO satellite and an UAS are used to provide continental, regional or local service. In addition, a constellation of LEO and MEO is used to provide services in both Northern and Southern hemispheres. In some case, the constellation can even provide global coverage including polar regions. For the later, this requires appropriate orbit inclination, sufficient beams generated and inter-satellite links.

The present disclosure considers an NTN that provides access to a UE in six reference scenarios, including.

- Circular orbiting and notional station keeping platforms.
- Highest round trip delay (RTD) constraint.
- Highest Doppler constraint.
- A transparent and a regenerative payload.
- One ISL case and one without ISL. A regenerative payload is mandatory in the case of inter-satellite links.
- Fixed or steerable beams resulting respectively in moving or fixed beam foot print on the ground.

The six scenarios are considered as described in Table 7 below, and are described in detail in Table 8.

Table 7 illustrates a reference scenario.

[Table 7]

|  | Transparent satellite | Regenerativ e satellite |
|---|---|---|
| GEO based non-terrestrial access network | Scenario A | Scenario B |
| LEO based non-terrestrial access network: steerable beams | Scenario C1 | Scenario D1 |
| LEO based non-terrestrial access network: the beams move with the satellite | Scenario C2 | Scenario D2 |

Table 8 illustrates reference scenario parameters.

[Table 8]

| Scenarios | GEO based non-terrestrial access network (Scenario A and B) | LEO based non-terrestrial access network (Scenario C & D) |
|---|---|---|
| Orbit type | notional station keeping position fixed in terms of elevation/azimuth with respect to a given earth point | circular orbiting around the earth |
| Altitude | 35,786 km | 600 km<br>1,200 km |
| Spectrum (service link) | <6 GHz (e.g. 2 GHz)<br>>6 GHz (e.g. DL 20 GHz, UL 30 GHz) | |
| Max channel bandwidth capability (service link) | 30 MHz for band < 6 GHz<br>1 GHz for band > 6 GHz | |
| Payload | Scenario A : Transparent (including radio frequency function only)<br>Scenario B: regenerative (including all or part of RAN functions) | Scenario C: Transparent (including radio frequency function only)<br>Scenario D: Regenerative (including all or part of RAN functions) |
| Inter-Satellite link | No | Scenario C: No<br>Scenario D: Yes/No (Both cases are possible.) |
| Earth-fixed beams | Yes | Scenario C1: Yes (steerable beams), see note 1<br>Scenario C2: No (the beams move with the satellite)<br>Scenario D 1: Yes (steerable beams), see note 1<br>Scenario D 2: No (the beams move with the satellite) |
| Max beam foot print size (edge to edge) regardless of the elevation angle | 3500 km (Note 5) | 1000 km |
| Min Elevation angle for both sat-gateway and user equipment | 10° for service link and 10° for feeder link | 10° for service link and 10° for feeder link |
| Max distance between satellite and user equipment at min elevation angle | 40,581 km | 1,932 km (600 km altitude)<br>3,131 km (1,200 km altitude) |

(continued)

| Scenarios | GEO based non-terrestrial access network (Scenario A and B) | LEO based non-terrestrial access network (Scenario C & D) |
|---|---|---|
| Max Round Trip Delay (propagation delay only) | Scenario A: 541.46 ms (service and feeder links)<br>Scenario B: 270.73 ms (service link only) | Scenario C: (transparent payload: service and feeder links)<br>- 25.77 ms (600km)<br>- 41.77 ms (1200km)<br>Scenario D: (regenerative payload: service link only)<br>- 12.89 ms (600km)<br>- 20.89 ms (1200km) |
| Max differential delay within a cell (Note 6) | 10.3 ms | 3.12 ms and 3.18 ms for respectively 600km and 1200km |
| Max Doppler shift (earth fixed user equipment) | 0.93 ppm | 24 ppm (600km)<br>21ppm (1200km) |
| Max Doppler shift variation (earth fixed user equipment) | 0.000 045 ppm/s | 0.27ppm/s (600km)<br>0.13ppm/s(1200km) |
| User equipment motion on the earth | 1200 km/h (e.g. aircraft) | 500 km/h (e.g. high speed train)<br>Possibly 1200 km/h (e.g. aircraft) |
| User equipment antenna types | Omnidirectional antenna (linear polarisation), assuming 0 dBi<br>Directive antenna (up to 60 cm equivalent aperture diameter in circular polarisation) | |
| User equipment Tx power | Omnidirectional antenna: UE power class 3 with up to 200 mW<br>Directive antenna: up to 20 W | |
| User equipment Noise figure | Omnidirectional antenna: 7 dB<br>Directive antenna: 1.2 dB | |
| Service link | 3GPP defined New Radio | |
| Feeder link | 3GPP or non-3GPP defined Radio interface | 3GPP or non-3GPP defined Radio interface |

Hereinafter, UL timing advance and maintenance of frequency synchronization will be described.

With consideration on the larger cell coverage, long round trip time (RTT) and high Doppler, enhancements are considered to ensure the performance for timing and frequency synchronization for UL transmission.

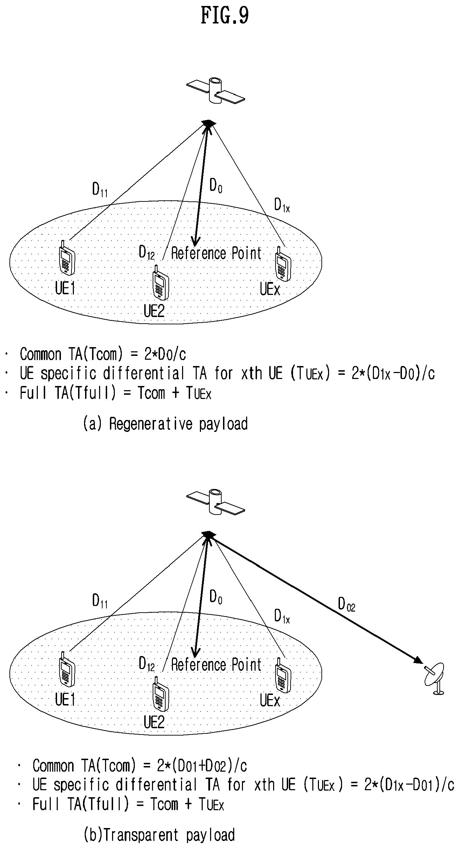

FIG. 9 illustrates a timing advance component in a wireless communication system to which the present disclosure may be applied.

In FIG. 9, a timing advance (TA) offset ($N_{TAoffset}$) is not shown for convenience of description. FIG. 9(a) illustrates a case of a regenerative payload, and FIG. 9(b) illustrates a case of a transparent payload.

For the TA in the initial access and the subsequent TA maintenance, the following solutions are identified with an illustration of the definition of terminology given in FIG. 9.

1) Option 1: Autonomous acquisition of the TA at UE with UE known location and satellite ephemeris

In this way, the required TA value for UL transmission including PRACH can be calculated by the UE. The corresponding adjustment can be done, either with UE-specific differential TA or full TA (consisting of UE specific differential TA and common TA).

With respect to the full TA compensation at the UE side, both the alignment on the UL timing among UEs and DL and UL frame timing at network side can be achieved. However, in case of satellite with transparent payload, further discussion on how to handle the impact introduced by feeder link will be conducted in normative work. Additional needs for the network to manage the timing offset between the DL and UL frame timing can be considered, if impacts introduced by feeder link is not compensated by UE in corresponding compensation.

With respect to the UE specific differential TA only, additional indication on a single reference point should be signalled to UEs per beam/cell for achieving the UL timing alignment among UEs within the coverage of the same beam/cell. Timing offset between DL and UL frame timing at the network side should also be managed by the network regardless of the satellite payload type.

With concern on the accuracy on the self-calculated TA value at the UE side, additional TA signalling from network to UE for TA refinement, e.g., during initial access and/or TA maintenance, can be determined in the normative work.

2) Option 2: Timing advanced adjustment based on network indication

In this way, the common TA, which refers to the common component of propagation delay shared by all UEs within the coverage of same satellite beam/cell, is broadcasted by the network per satellite beam/cell. The calculation of this common TA is conducted by the network with assumption on at least a single reference point per satellite beam/cell.

The indication for UE-specific differential TA from network as the Rel-15 TA mechanism is also needed. For satisfying the larger coverage of NTN, extension of value range for TA indication in RAR, either explicitly or implicitly, is identified. Whether to support negative TA value in corresponding indication will be determined in the normative phase.

In addition, indication of timing drift rate, from the network to UE, is also supported to enable the TA adjustment at UE side.

For calculation of common TA in the above two options, single reference point per beam is considered as the baseline.

For the UL frequency compensation, at least for LEO system, the following solutions are identified with consideration on the beam specific post-compensation of common frequency offset at the network side:

- Option-1: Both the estimation and pre-compensation of UE-specific frequency offset are conducted at the UE side. The acquisition of this value can be done by utilizing DL reference signals, UE location and satellite ephemeris.
- Option-2: The required frequency offset for UL frequency compensation at least in LEO systems is indicated by the network to UE. The acquisition on this value can be done at the network side with detection of UL signals, e.g., preamble.

Indication of compensated frequency offset values by the network is also supported in case that compensation of the frequency offset is conducted by the network in the uplink and/or the downlink respectively. However, indication of Doppler drift rate is not necessary.

Random access operation and related operation

When there is no PUSCH transmission resource (i.e., Uplink Grant) allocated by the base station, a terminal may perform a random access operation. A random access of the NR system may be initiated 1) when a terminal requests or resumes an RRC connection, 2) when a terminal performs handover or secondary cell group (SCG) addition (i.e., SCG addition) to an adjacent cell, 3) when transmitting a scheduling request to a base station, 4) when a base station indicates a random access of a terminal with a PDCCH order, 5) when a beam failure or RRC connection failure is detected.

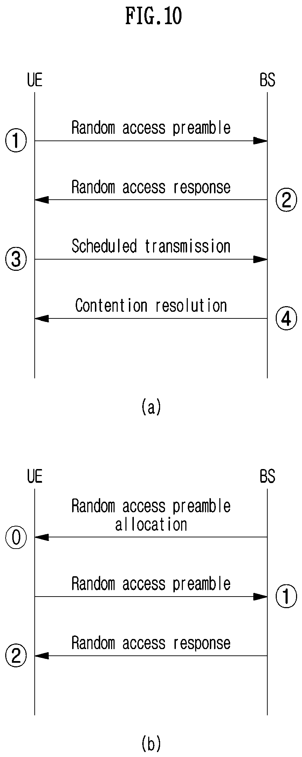

FIG. 10 illustrates a random access procedure in a wireless communication system to which the present disclosure may be applied. FIG. 10(a) illustrates a contention-based random access procedure, and FIG. 10(b) illustrates a dedicated random access procedure.

Referring to FIG. 10(a), a contention-based random access process includes the following four steps. Hereinafter, messages transmitted in steps 1 to 4 may be referred to as messages (Msg) 1 to 4, respectively.

- Step 1: A terminal transmits a random access channel (RACH) preamble through a physical random access channel (PRACH).
- Step 2: A terminal receives a random access response (RAR) through a downlink shared channel (DL-SCH) from a base station.
- Step 3: A terminal transmits a Layer 2 / Layer 3 message to a base station through an uplink shared channel (UL-SCH).
- Step 4: A terminal receives a contention resolution message from a base station through a DL-SCH.

A terminal may receive information on a random access from a base station through system information.

If a random access is required, a terminal transmits a RACH preamble to a base station as in step 1. A base station may distinguish each random access preamble through a time/frequency resource (i.e., RACH Occasion (RO)) and a random access preamble index (PI) in which a random access preamble is transmitted.

When a base station receives a random access preamble from a terminal, the base station transmits a random access response (RAR) message to the terminal as in step 2. For reception of a random access response message, within a preconfigured time window (e.g., ra-ResponseWindow), a terminal monitors a CRC-masked L1/L2 control channel (PDCCH) with a RA-RNTI (Random Access-RNTI) including scheduling information for the random access response message. A PDCCH masked with a RA-RNTI may be transmitted only through a common search space. When receiving a scheduling signal masked by a RA-RNTI, a terminal may receive a random access response message from a PDSCH indicated by the scheduling information. Thereafter, a terminal checks whether there is random access response information indicated to itself in the random access response message. Whether or not random access response information indicated to itself exists may be checked by whether a random access preamble ID (RAPID) for a preamble transmitted by the terminal exists. An index of a preamble transmitted by a terminal and a RAPID may be the same. Random access response information includes a corresponding random access preamble index, timing offset information for UL synchronization (e.g., Timing Advance Command (TAC)), UL scheduling information for message 3 transmission (e.g., UL grant) and terminal temporary identification information (e.g., TC-RNTI (Temporary-C-RNTI)).

A terminal receiving random access response information transmits UL-SCH (Shared Channel) data (message 3) through a PUSCH according to L scheduling information and a timing offset value, as in step 3. A time and frequency resource to which a PUSCH carrying message 3 is mapped/transmitted is defined as PO (PUSCH Occasion). Message 3 may include an ID of a terminal (or a global ID of a terminal) . Alternatively, message 3 may include RRC connection request related information (e.g., RRCSetupRequest message) for initial access. In addition, message 3 may include a buffer status report (BSR) on an amount of data available for transmission by a terminal.

After receiving UL-SCH data, as in step 4, a base station transmits a contention resolution message (message 4) to a terminal. When a terminal receives a contention resolution message and a contention is resolved successfully, a TC-RNTI is changed to a C-RNTI. Message 4 may include an ID of a terminal and/or RRC connection related information (e.g., an RRCSetup message). If information transmitted through message 3 and information received through message 4 do not match, or if message 4 is not received for a certain duration of time, a terminal may retransmit message 3 as a contention resolution has failed.

Referring to FIG. 10(b), a dedicated random access process includes the following three steps. Hereinafter, messages transmitted in steps 0 to 2 may be referred to as messages (Msg) 0 to 2, respectively. A dedicated random access procedure may be triggered using a PDCCH (hereinafter referred to as a PDCCH order) for which a base station instructs to transmit a RACH preamble.

- Step 0: A base station allocates a RACH preamble through dedicated signaling to a terminal.
- Step 1: A terminal transmits a RACH preamble through a PRACH.
- Step 2: A terminal receives a random access response (RAR) through a DL-SCH from a base station.

The operations of steps 1 and 2 of a dedicated random access procedure may be the same as steps 1 and 2 of a contention-based random access procedure.

In NR, DCI format 1_0 is used to initiate a non-contention-based random access procedure with a PDCCH order. DCI format 1_0 is used to schedule a PDSCH in one DL cell. Meanwhile, when a CRC (Cyclic Redundancy Check) of DCI format 1_0 is scrambled with a C-RNTI and all bit values of the "Frequency domain resource assignment" field are 1, DCI format 1_0 is used as a PDCCH order indicating a random access procedure. do. In this case, fields of DCI format 1_0 are configured as follows.

- RA preamble index: 6 bits
- UL / SUL (Supplementary UL) indicator: 1 bit. When bit values of a RA preamble index are not all 0 and SUL is configured in a cell for a terminal, it indicates a UL carrier on which a PRACH is transmitted in a cell. Otherwise, it is reserved.
- SSB (Synchronization Signal / Physical Broadcast Channel) index: 6 bits. When all bit values of a RA preamble index are not 0, it indicates an SSB used to determine a RACH opportunity for PRACH transmission. Otherwise, it is reserved.
- PRACH mask index: 4 bits. When all bit values of a RA preamble index are not 0, it indicates a RACH opportunity associated with an SSB indicated by an SSB index. Otherwise, it is reserved.
- Reserved: 10 bits

When DCI format 1_0 does not correspond to a PDCCH order, DCI format 1_0 includes fields used to schedule a PDSCH (e.g., TDRA (Time domain resource assignment), MCS (Modulation and Coding Scheme), HARQ process number, PDSCH-to-HARQ_feedback timing indicator, etc.).

In the NR system, lower latency than the existing system may be required. In addition, if a random access process occurs in an U-band, the random access process is terminated and contention is resolved only when a terminal and a base station sequentially succeed in an LBT in both a 4-step random access process. If an LBT fails in even one step of a 4-step random access process, resource efficiency decreases and latency increases. Specifically, if an LBT fails in a scheduling/transmission process associated with message 2 or message 3, a decrease in resource efficiency and an increase in latency may occur significantly. Even a random access process in an L-band may require a low-latency random access process in various scenarios of an NR system. Accordingly, a 2-step random access procedure may be performed on an L-band as well.

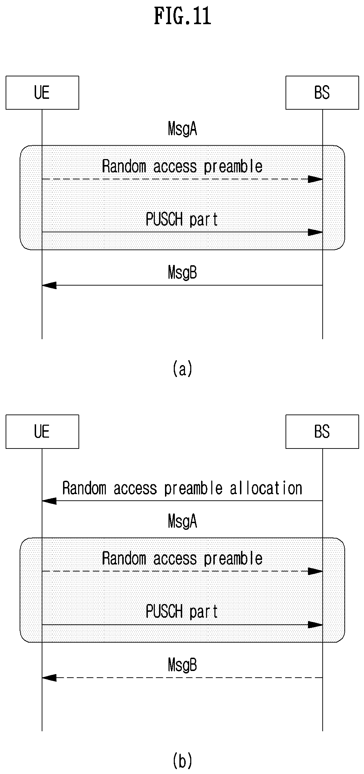

FIG. 11 illustrates a two-step random access process in a wireless communication system to which the present disclosure may be applied.

As shown in FIG. 11(a), a 2-step random access process may be configured in two steps of uplink signal transmission (referred to as message A, corresponding to PRACH preamble + Msg3 PUSCH) from a terminal to a base station and downlink signal transmission (referred to as message B, and corresponding to RAR + Msg4 PDSCH) from a base station to a terminal.

In addition, in a non-contention random access process, a random access preamble and a PUSCH part may be transmitted together as shown in FIG. 11(b).

Although not shown in FIG. 11, a PDCCH for scheduling message B may be transmitted from a base station to a terminal, which may be referred to as Msg. B PDCCH.

Uplink/downlink signal transmission and reception method in NTN

The above-described contents (NR frame structure, NTN system, etc.) may be applied in combination with the methods proposed in the present disclosure to be described later, or may be supplemented to clarify technical characteristics of the methods proposed in the present disclosure.

In addition, the methods to be described later are related to uplink transmission, which may be equivalently applied to a downlink signal transmission method in the above-described NR system or LTE system. It may be modified or replaced to fit terms, expressions, structures, etc. defined in each system so that the technical idea proposed in the present disclosure can be implemented in a corresponding system.

In order to secure wider coverage or to provide a wireless communication service in a place where it is not easy to install a wireless communication base station, a use of NR non-terrestrial network (NTN) or LTE NTN service is being considered. Existing terrestrial network (TN) services such as NR and LTE services provided wireless communication services to UEs by installing corresponding base stations on the ground. On the other hand, without installing a base station on the ground, NTN service means providing wireless communication services to UEs by installing them in places not located on the ground such as artificial satellites (geostationary orbit, low orbit, medium orbit, etc.), airplanes, unmanned aerial vehicles, drones, etc.

Frequency bands considered for NR NTN service are mainly considered the 2 GHz band (S-band: 2-4 GHz) in the band below 6 GHz, the DL 20 GHz, UL 30 GHz band (Ka-Band: 26.5-40GHz) in the band above 6 GHz.

In Table 8, the maximum round trip delay for each scenario is exemplified.

The NR NTN service is largely divided into two methods, which are a transparent payload method as shown in FIG. 7 and a regenerative payload method as shown in FIG. 8. Briefly, a regenerative payload method means that a satellite itself becomes a gNB, and a transparent payload method means that a satellite transmits a corresponding signal when receiving a payload from a terrestrial base station.

In the existing TN (e.g., NR or LTE), since a UE moves in a cell, even if a distance to a base station changes, when a UE transmits a PRACH preamble, the preamble is received to a base station within a time duration of a specific RACH occasion (RO) (or PRACH occasion). In addition, as a timing advance (TA) value for a UE to transmit a UL signal/channel, it is configured with an initial TA value and a TA offset. These values are values indicated by a base station and correspond to TA values that can be expressed in a cell coverage range of the corresponding base station. Meanwhile, in a case of a PDCCH order, if a base station indicates DCI for PDCCH order, a UE transmits a PRACH preamble and performs UL signal/channel transmission using a TA value (i.e., initial TA) indicated through a random access response (RAR) transmitted from a base station.

On the other hand, in NTN, a distance between a satellite and a UE is changed due to a movement of a satellite regardless of a movement of a UE. In order to overcome this, it is possible to find out a location of a UE from a global navigation satellite system (GNSS), and a UE can calculate a UE-specific TA, which is a round trip delay (RTD) between a UE and a satellite, through orbit information of a satellite indicated by a base station. Here, when a UE transmits a PRACH preamble on the selected RO (i.e., PRACH occasion), the UE-specific TA is configured so that a satellite (or gNB) can receive the PRACH preamble within a time duration of the corresponding RO (i.e., PRACH occasion). In a case that a PRACH preamble transmitted from the RO selected by a UE is transmitted by applying only a UE-specific TA, when the corresponding PRACH preamble arrives at a satellite (or gNB) and is received by a satellite, the PRACH preamble is received with a delay from a reference time of the RO. Accordingly, an initial TA value may be indicated by the corresponding delayed value in an RAR transmitted from a base station. Additionally, a common TA corresponds to an RTD between a gNB on the ground (or a reference point, where the reference point is where the DL and UL frame boundaries align) and a satellite, and it may be defined/configured so that a base station transmits to a UE.

Additionally, an NTN may configure a TA value to UE specific TA + common TA (if provided) before Msg 1/Msg A transmission. Here, the UE-specific TA may be referred to as a round trip delay (RTD) between a UE and a satellite calculated by a UE itself as described above.

In order for a UE to accurately calculate the UE-specific TA, it is preferable that a UE knows a satellite orbit. Accordingly, a base station may indicate a satellite orbit, or it may be configured that a UE may know the satellite orbit in advance (e.g., through a universal subscriber identity module (USIM), etc.). Here, the following two options are considered as a satellite orbit format.

- Option 1: Satellite ephemeris format based on satellite position and velocity state vectors

For example, position and velocity vectors (x, y, z, vx, vy, vz) at reference time epoch t0

- Option 2: Satellite ephemeris format based on orbital elements

For example, Keplerian Orbit Elements (a, e, $\omega$, $\Omega$, i, M0)

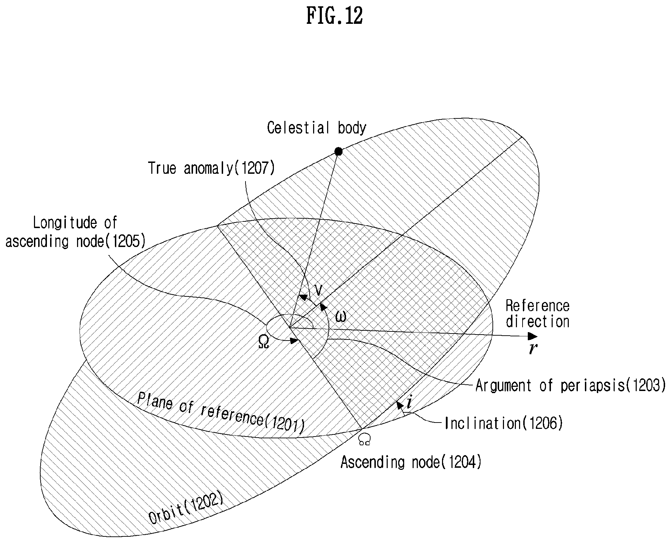

FIG. 12 is a diagram for explaining a Kepler orbital element.

Referring to FIG. 12, the Keplerian Orbit Elements method, which is an example of the option 2, is a method of representing an orbit of a satellite using the following six elements.

i) Semi-major axis "a" [m]: Since a satellite orbit is an ellipse, it represents half of the major axis in an elliptical orbit.

ii) Eccentricity "e": An elliptical orbit is 0 < e < 1.

iii) Argument of periapsis "$\omega$" [rad]: an angle from an orbital periapsis (a point at which an object is closest to a centrosome when it orbits) to an ascending node (1204) and determines a direction of an ellipse in a plane of an orbit (1202). (denoted as angle $\omega$ (1203) in Fig. 12).

iv) Longitude of ascending node "$\Omega$" [rad]: Ascending node (1204) refers to a point at which an orbit passes from below a plane of reference (1201) upward, and an angle measured from a reference point to an ascending point 1204 in a counterclockwise direction is referred to as a longitude of ascending node. (denoted as $\Omega$ (1205) in Fig. 12). A reference point in a solar system is a vernal equinox.

v) Orbit inclination "i" [rad]: It means a degree of inclination of an ellipse with respect to a plane of reference (1201), and it is measured as an angle between a plane of an orbit (1202) and a plane of reference (1201) at an ascending point (1204) (a point at which an orbit passes from below a plane of reference (1201) upward). (denoted as angle i (1206) in Fig. 12) .

vi) Mean anomaly "M0" = M(t0) [rad] (at epoch t0 [JD]): It is mathematically convenient as an angle continuously changing with time, but the angle does not match a geometric angle. A true anomaly "v" (1207) may be used as this value, and the true anomaly value represents an angle between an orbital periapsis and an orbiting object at any point in time, so that the angle coincides with a geometric angle. Accordingly, a true anomaly (1207) is denoted as an angle (v) (1207) in FIG. 12, but the mean anomaly is not denoted.

In the Keplerian Orbit Elements method, the first five elements are not values that change with time, such as a length of a semi-major axis, an eccentricity, an argument of periapsis, a longitude of ascending node, an inclination, etc. (assuming there is no heavy interference). Therefore, a mean anomaly (or true anomaly) indicating an actual satellite position corresponds to a value that should be provided for each epoch (reference) time.

In the present disclosure, in a situation in which the two formats indicating orbit information are signaled from a base station to a UE, an additional adjusting value (i.e., additional ephemeris (orbit information) information) in order for a UE to more accurately calculate the orbit information is proposed.

A UE uses a UE-specific TA to compensate for a service link delay between a UE and a satellite. Here, a UE calculates a UE specific TA using i) satellite orbit information provided from a base station and ii) position information of a UE obtained based on GNSS. The satellite orbit information is configured/indicated by a base station to a UE through a broadcast channel (e.g., SIB, RRC signaling, etc.).

However, when considering an operation of updating a UE specific TA before a UE performs UL transmission, a UE needs to know satellite orbit information more accurately. Here, as one method for increasing an accuracy of satellite orbit information, a base station may provide satellite orbit information to a UE at every reference time (or epoch time), but this method is inefficient because signaling overhead of a base station increases.

Therefore, in the present disclosure, in a situation in which a base station provides satellite orbit information to a UE according to a specific period (e.g., a specific value smaller than a validity window), a method of configuring/indicating a adjusting for satellite orbit information (i.e., additional ephemeris information) so that a UE can more accurately estimate satellite orbit information.

A base station may additionally configure/indicate satellite orbit information adjusting value to a UE according to time in the same DL signal/channel (or in an independent (individual) DL signal/channel (e.g., SIB, RRC signaling, MAC-CE, etc.)) as a DL signal/channel (e.g., SIB, RRC signaling, MAC-CE, etc.) through which satellite orbit information is transmitted. As such, when a base station indicates an adjusting value of satellite orbit information, a UE can more accurately calculate satellite orbit information at a specific time based on the value, and based on this, a UE can more accurately calculate a UE specific TA.

A specific example will be described as follows.

Option 1: When satellite orbit information is transmitted using a position and velocity state vector ephemeris format, an adjusting value for satellite orbit information is provided to a UE as follows can be configured/indicated.

1) A drift rate (or an amount of change according to time (e.g., delta)) of a three-dimensional position value (i.e., position X, Y, Z [m] in earth-centered earth-fixed (ECEF)) and/or a three-dimensional velocity value (i.e., velocity VX, VY, VZ [m/s] in ECEF) for a satellite may be provided to a UE.

Here, the drift rate (or the amount of change according to time (e.g., delta)) may be expressed as a value of a first order derivative.

That is, how much a specific parameter $P_X$ has changed from a reference time (or epoch time) (i.e., $T_R$) to a target time (i.e., $T_0$) can be calculated by using a drift rate (or delta value) (i.e., $A_X$) as in Equation 3 below.

【Equation 3】

$$P_X \text{ at } (T_0) = P_X \text{ at } (T_R) + A_X \times (T_0 - T_R)$$

2) Additionally, a drift rate variation of a three-dimensional position value (i.e., position X, Y, Z [m] in ECEF) and/or a three-dimensional velocity value (i.e., velocity VX, VY, VZ [m/s] in ECEF) for a satellite may be provided in addition to the drift rate.

Here, the drift rate variation may be expressed as a value of a second order derivative.

That is, how much a specific parameter $P_X$ has changed from a reference time (or epoch time) (i.e., $T_R$) to a target time (i.e., $T_0$) can be calculated by using a drift rate (or delta value) and a drift rate variation (i.e., $B_X$) as in Equation 4 below.

【Equation 4】

$$P_X \text{ at } (T_0) = P_X \text{ at } (T_R) + A_X \times (T_0 - T_R) + a \times B_X \times (T_0 - T_R)^2$$

Here, 'a' may be a predetermined value or a value indicated by a base station (e.g., a=1, 1/2, 1/6, etc.).

Alternatively, characteristically, a base station may configure/indicate only the drift rate variation to a UE without the drift rate as an adjusting value of satellite orbit information. In this case, as the drift rate value in Equation 4, it may be configured that a UE use a default value previously indicated by a base station, or use a default value specified in the standard/specification, or reuse the drift rate value previously (immediately) received from a base station and used for calculation.

3) The specific Parameter $P_X$ of Equation 3 and/or Equation 4 may be a three-dimensional position value for a satellite (i.e., position X, Y, Z [m] in ECEF), or may be a three-dimensional velocity value for a satellite (i.e., velocity VX, VY, VZ [m/s] in ECEF), respectively. In addition, the drift rate $A_X$ of Equation 3 and/or Equation 4 may be a drift rate of a three-dimensional position value for a satellite, or a drift rate of a three-dimensional velocity value for a satellite, respectively. In addition, the drift rate variation $B_X$ of Equation 3 and/or Equation 4 may be a drift rate variation of a three-dimensional position value for a satellite, or a drift rate variation of a three-dimensional velocity value for a satellite, respectively.

Option 2: When satellite orbit information is transmitted using an orbital parameter ephemeris format, an adjusting value may be configured/indicated as follows.

1) A drift rate (or an amount of change according to time (e.g., delta)) and/or a drift rate variation, etc. of at least one of a semi-major axis "a" [m], an eccentricity "e", an argument of periapsis "$\omega$" [rad], a longitude of ascending node "$\Omega$" [rad], an inclination "i" [rad], a mean anomaly "M0" [rad] may be configured/indicated to a UE.

Here, characteristically, since the remaining parameters except for the Mean anomaly among the parameters do not change well unless a satellite orbit is significantly changed and has a semi-static characteristic, for the remaining parameters, adjusting values may not be indicated to a UE, and a drift rate (or an amount of change according to time (e.g., delta)) and/or a drift rate variation may be configured/indicated to a UE only for the mean anomaly M (rad) value.

The drift rate (or the amount of change according to time (e.g., delta)) may be expressed as a value of a first order derivative, and the drift rate variation may be expressed as a value of a second order derivative.

In Equation 3 and/or Equation 4 exemplified using the position and velocity state vector ephemeris format, orbital parameter values may be applied/used to each $P_X$ position. In addition, a drift rate value of the orbital parameters may be applied/used to the drift rate $A_X$ of the corresponding equation, and a drift rate variation value of the orbital parameters may be applied/used to the drift rate variation $B_X$ of the corresponding equation.

Additionally, an adjusting value additionally configured/indicated by a base station may correspond to satellite orbit information having higher accuracy (e.g., high precision level) than the existing satellite orbit information value indicated by SI (system information). Alternatively, an adjusting value additionally configured/indicated by a base station may correspond to a reference time (or epoch time) indicated by a base station or time information (e.g., time stamp) related to a reference time (or epoch time) of the GNSS. Alternatively, an adjusting value additionally configured/indicated by a base station may be TA information calculated according to a location information report of a UE (or calculated according to the TA report information of a UE). Here, the TA information may include all or part of UE specific TA, common TA, and a full TA information.

Meanwhile, in order for a base station to use as a basis for additionally configuring/indicating a satellite orbit information value, a base station may indicate a UE to report a satellite orbit information value calculated by the UE to the base station, or a UE may be configured to calculate a satellite orbit information value and then report it to a base station. In addition, when a UE receives satellite orbit information additionally configured/indicated from a base station, the terminal may adjust, renew, or update satellite orbit information based on the received information.

In the proposed method, an entity transmitting a signal/channel including an adjusting value of satellite orbit information may be an NTN gNB or a TN gNB connected to a specific UE.

Since examples of the above-described proposed method may also be included as one of the implementation methods of the present disclosure, it is obvious that they may be regarded as a kind of proposed method. In addition, the above-described proposed methods may be implemented independently, but may also be implemented in a form of a combination (or merge) of some of the proposed methods. A rule will be defined so that a base station informs a UE of whether the proposed methods are applied or not (or information on the rules of the proposed methods) through a predefined signal (e.g., a physical layer signal or a higher layer signal). The higher layer may include, for example, one or more of functional layers such as MAC, RLC, PDCP, RRC, and SDAP.

The methods, embodiments or descriptions for implementing the method proposed in the present disclosure may be applied separately, or one or more methods (or embodiments or descriptions) may be applied in combination. In addition, the methods proposed in the present disclosure can be applied to a technique for estimating an exact location of a UE.

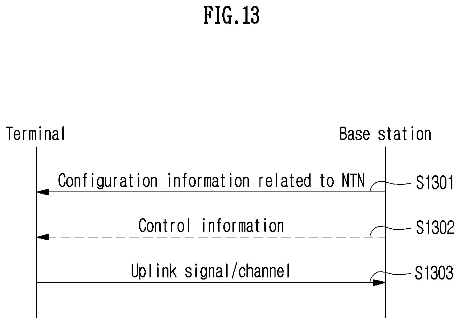

FIG. 13 illustrates a signaling method for an uplink transmission/reception method according to an embodiment of the present disclosure.

FIG. 13 illustrates signaling between a network (e.g., TRP 1, TRP 2) and a UE to which the methods proposed in the present disclosure can be applied. Here, the UE/Network is just an example, and may be substituted for various devices. FIG. 13 is only for convenience of description, and does not limit the scope of the present disclosure. Also, some step(s) illustrated in FIG. 13 may be omitted depending on circumstances and/or configurations.

Referring to Figure 13, a terminal receives configuration information related to an NTN from a base station (S1301).

Here, configuration information related to an NTN may mean configuration information for providing information needed for the terminal to access the wireless communication system through a non-terrestrial network (NTN) including a satellite.

The configuration information may be transmitted through higher layer signaling (e.g., SIB, RRC signaling, MAC-CE, etc.).

The configuration information may include information for adjusting an orbit of the satellite (first information) and information on common timing advance (TA) (second information).

For example, when orbit information for the satellite is provided to the terminal in a format of a position vector and a velocity vector, the first information may include a position vector (x, y, z [m]) and a velocity vector (vx, vy, vz [m/s]) for the satellite.

In this case, the first information may further include a drift rate of a three-dimensional position value and/or a three-dimensional velocity value for the satellite. And/or the first information may further include a drift rate variation of a three-dimensional position value and/or a three-dimensional velocity value for the satellite.

As another example, when orbit information for the satellite is provided to the terminal in a format of one or more orbit parameters (i.e., orbital parameter ephemeris format), the first information may include information on a semi-major axis, an eccentricity, an argument of periapsis, a longitude of ascending node, an inclination, a mean anomaly.

In this case, the first information may further include a drift rate of at least one of a semi-major axis, an eccentricity, an argument of periapsis, a longitude of ascending node, an inclination, a mean anomaly. And/or the first information may further include a drift rate variation of at least one of a semi-major axis, an eccentricity, an argument of periapsis, a longitude of ascending node, an inclination, a mean anomaly.

Meanwhile, although not shown in FIG. 13, a terminal may transmit location information of the terminal and/or a satellite orbit value calculated by the terminal to the base station. In this case, the first information may be derived/calculated by the base station based on the location information of the terminal and/or the satellite orbit value. Here, the location information of the terminal may include at least one of the terminal-specific TA value and the common TA value.

A terminal may receive control information (i.e., downlink control information) for scheduling/triggering an uplink signal/channel from the base station (S1302).

Here, control information may be transmitted through a PDCCH. In addition, when control information is not required for transmission of an uplink signal/channel (e.g., in the case of transmission of a first message for the random access procedure), this step may be omitted.

A terminal transmits an uplink signal/channel to a base station at a timing determined based on a terminal-specific TA value and a common TA value derived from the second information (S1303).

Here, a terminal may determine/compute a terminal-specific TA value for the terminal based on the location of the terminal and the configuration information, and may transmit an uplink signal/channel to a base station at a timing determined based on the calculated terminal-specific TA value and the common TA value derived from the second information.

Here, an uplink signal/channel may include a PUSCH/SRS/PUCCH/PRACH, etc. For example, in the case of a PUSCH, the control information may correspond to DCI for scheduling the PUSCH, and in case of an SRS, the control information may correspond to DCI triggering transmission of the SRS (for aperiodic SRS transmission), and in case of a PUCCH, the control information may correspond to, for example, DCI scheduling a PDSCH.

In addition, when uplink transmission corresponds to a first message transmission for a random access procedure, the step of transmitting and receiving the control information may be omitted.

In this case, the first message for the random access procedure may correspond to MSG1 (i.e., a PRACH or a random access preamble transmitted in a PRACH) and/or MSG3 (i.e., a PDSCH scheduled by random access response UL grant) in case of a 4-step random access procedure (see FIG. 10), and may correspond to MSGA (i.e., a PRACH carrying a random access preamble and a PUSCH) in case of a two-step random access procedure (see FIG. 11).

In addition, when an uplink transmission corresponds to transmission of a first message for a random access procedure, a terminal receives a second message for a random access procedure from a base station in response to a first message. Thereafter, in case of a 4-step random access procedure, as illustrated in FIG. 10, transmission/reception of MSG3 and MSG4 may be performed.

Here, a second message for a random access procedure may correspond to MSG2 (i.e., a PDCCH and a PDSCH for random access response) and/or MSG4 (i.e., a PDSCH for contention resolution) in case of a 4-step random access procedure (see FIG. 10), and may correspond to MSGB (i.e., a PUSCH scheduled by a random access response UL grant and a PDSCH for contention resolution) in case of a two-step random access procedure (see FIG. 11).

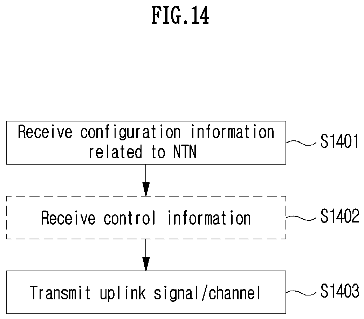

FIG. 14 is a diagram illustrating an operation of a terminal in an uplink transmission/reception method according to an embodiment of the present disclosure.

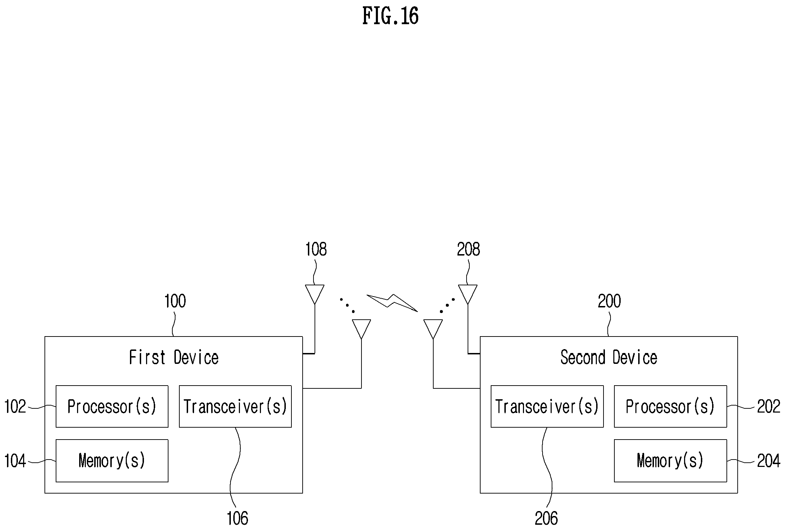

In FIG. 14, an operation of a terminal based on the previously proposed methods is exemplified. The example of FIG. 14 is for convenience of description, and does not limit the scope of the present disclosure. Some step(s) illustrated in FIG. 14 may be omitted depending on circumstances and/or configurations. In addition, a terminal in FIG. 14 is only one example, and may be implemented as the device illustrated in FIG. 16 below. For example, the processor 102/202 of FIG. 16 may control to transmit/receive a channel/signal/data/information, etc. using the transceiver 106/206, and may control to store a transmitted or received channel/signal/data/information, etc. may be controlled in the memory 104/204.

In addition, the operations of FIG. 14 may be processed by one or more processors 102, 202 of FIG. 16, and the operations of FIG. 14 may be stored in a memory (e.g., one or more memories 104, 204 of FIG. 16) in the form of instructions/programs (e.g., instruction, executable code) for driving at least one processor (e.g., 102 and 202) of FIG. 16.

Referring to FIG. 14, a terminal receives configuration information related to an NTN from a base station (S1401).

Here, configuration information related to an NTN may mean configuration information for providing information needed for the terminal to access the wireless communication system through a non-terrestrial network (NTN) including a satellite.

The configuration information may be transmitted through higher layer signaling (e.g., SIB, RRC signaling, MAC-CE, etc.).

The configuration information may include information for adjusting an orbit of the satellite (first information) and information on common timing advance (TA) (second information).

For example, when orbit information for the satellite is provided to the terminal in a format of a position vector and a velocity vector, the first information may include a position vector (x, y, z [m]) and a velocity vector (vx, vy, vz [m/s]) for the satellite.

In this case, the first information may further include a drift rate of a three-dimensional position value and/or a three-dimensional velocity value for the satellite. And/or the first information may further include a drift rate variation of a three-dimensional position value and/or a three-dimensional velocity value for the satellite.

As another example, when orbit information for the satellite is provided to the terminal in a format of one or more orbit parameters (i.e., orbital parameter ephemeris format), the first information may include information on a semi-major axis, an eccentricity, an argument of periapsis, a longitude of ascending node, an inclination, a mean anomaly.

In this case, the first information may further include a drift rate of at least one of a semi-major axis, an eccentricity, an argument of periapsis, a longitude of ascending node, an inclination, a mean anomaly. And/or the first information may further include a drift rate variation of at least one of a semi-major axis, an eccentricity, an argument of periapsis, a longitude of ascending node, an inclination, a mean anomaly.

Meanwhile, although not shown in FIG. 14, a terminal may transmit location information of the terminal and/or a satellite orbit value calculated by the terminal to the base station. In this case, the first information may be derived/calculated by the base station based on the location information of the terminal and/or the satellite orbit value. Here, the location information of the terminal may include at least one of the terminal-specific TA value and the common TA value.

A terminal may receive control information (i.e., downlink control information) for scheduling/triggering an uplink signal/channel from a base station (S1402).

Here, control information may be transmitted through a PDCCH. In addition, when control information is not required for transmission of an uplink signal/channel (e.g., in the case of transmission of a first message for the random access procedure), this step may be omitted.

A terminal transmits an uplink signal/channel to a base station at a timing determined based on a terminal-specific TA value and a common TA value derived from the second information (S1403).

Here, a terminal may determine/compute a terminal-specific TA value for the terminal based on the location of the terminal and the configuration information, and may transmit an uplink signal/channel to a base station at a timing determined based on the calculated terminal-specific TA value and the common TA value derived from the second information.

Here, an uplink signal/channel may include a PUSCH/SRS/PUCCH/PRACH, etc. For example, in the case of a PUSCH, the control information may correspond to DCI for scheduling the PUSCH, and in case of an SRS, the control information may correspond to DCI triggering transmission of the SRS (for aperiodic SRS transmission), and in case of a PUCCH, the control information may correspond to, for example, DCI scheduling a PDSCH.

In addition, when uplink transmission corresponds to a first message transmission for a random access procedure, the step of transmitting and receiving the control information may be omitted.

In this case, the first message for the random access procedure may correspond to MSG1 (i.e., a PRACH or a random access preamble transmitted in a PRACH) and/or MSG3 (i.e., a PDSCH scheduled by random access response UL grant) in case of a 4-step random access procedure (see FIG. 10), and may correspond to MSGA (i.e., a PRACH carrying a random access preamble and a PUSCH) in case of a two-step random access procedure (see FIG. 11).

In addition, when an uplink transmission corresponds to transmission of a first message for a random access procedure, a terminal receives a second message for a random access procedure from a base station in response to a first message. Thereafter, in case of a 4-step random access procedure, as illustrated in FIG. 10, transmission/reception of MSG3 and MSG4 may be performed.

Here, a second message for a random access procedure may correspond to MSG2 (i.e., a PDCCH and a PDSCH for random access response) and/or MSG4 (i.e., a PDSCH for contention resolution) in case of a 4-step random access procedure (see FIG. 10), and may correspond to MSGB (i.e., a PUSCH scheduled by a random access response UL grant and a PDSCH for contention resolution) in case of a two-step random access procedure (see FIG. 11).

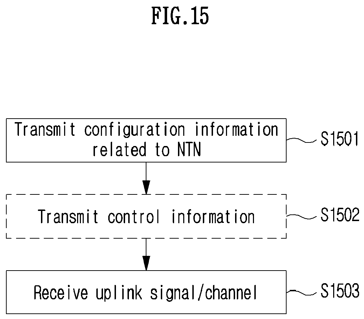

FIG. 15 is a diagram illustrating an operation of a base station in an uplink transmission/reception method according to an embodiment of the present disclosure.

In FIG. 15, an operation of a base station based on the previously proposed methods is exemplified. The example of FIG. 15 is for convenience of description, and does not limit the scope of the present disclosure. Some step(s) illustrated in FIG. 15 may be omitted depending on circumstances and/or configurations. In addition, a base station in FIG. 15 is only one example, and may be implemented as the device illustrated in FIG. 16 below. For example, the processor 102/202 of FIG. 16 may control to transmit/receive a channel/signal/data/information, etc. using the transceiver 106/206, and may control to store a transmitted or received channel/signal/data/information, etc. may be controlled in the memory 104/204.

In addition, the operations of FIG. 15 may be processed by one or more processors 102, 202 of FIG. 16, and the operations of FIG. 15 may be stored in a memory (e.g., one or more memories 104, 204 of FIG. 16) in the form of instructions/programs (e.g., instruction, executable code) for driving at least one processor (e.g., 102 and 202) of FIG. 16.

Referring to FIG. 15, a base station transmits configuration information related to an NTN to a terminal (S1501).

Here, configuration information related to an NTN may mean configuration information for providing information needed for the terminal to access the wireless communication system through a non-terrestrial network (NTN) including a satellite.

The configuration information may be transmitted through higher layer signaling (e.g., SIB, RRC signaling, MAC-CE, etc.).

The configuration information may include information for adjusting an orbit of the satellite (first information) and information on common timing advance (TA) (second information).

For example, when orbit information for the satellite is provided to the terminal in a format of a position vector and a velocity vector, the first information may include a position vector (x, y, z [m]) and a velocity vector (vx, vy, vz [m/s]) for the satellite.

In this case, the first information may further include a drift rate of a three-dimensional position value and/or a three-dimensional velocity value for the satellite. And/or the first information may further include a drift rate variation of a three-dimensional position value and/or a three-dimensional velocity value for the satellite.

As another example, when orbit information for the satellite is provided to the terminal in a format of one or more orbit parameters (i.e., orbital parameter ephemeris format), the first information may include information on a semi-major axis, an eccentricity, an argument of periapsis, a longitude of ascending node, an inclination, a mean anomaly.

In this case, the first information may further include a drift rate of at least one of a semi-major axis, an eccentricity, an argument of periapsis, a longitude of ascending node, an inclination, a mean anomaly. And/or the first information may further include a drift rate variation of at least one of a semi-major axis, an eccentricity, an argument of periapsis, a longitude of ascending node, an inclination, a mean anomaly.

Meanwhile, although not shown in FIG. 15, a base station may receive location information of a terminal and/or a satellite orbit value calculated from the terminal. In this case, the first information may be derived/calculated by the base station based on the location information of the terminal and/or the satellite orbit value. Here, the location information of the terminal may include at least one of the terminal-specific TA value and the common TA value.

A base station may transmit control information (i.e., downlink control information) for scheduling/triggering an uplink signal/channel to a terminal (S1502).

Here, control information may be transmitted through a PDCCH. In addition, when control information is not required for transmission of an uplink signal/channel (e.g., in the case of transmission of a first message for the random access procedure), this step may be omitted.

A base station receives an uplink signal/channel from a terminal at a timing determined based on a terminal-specific TA value and a common TA value derived from the second information (S1503).

Here, a terminal-specific TA value for the terminal may be determined by the terminal based on the location of the terminal and the configuration information, and may receive an uplink signal/channel from a terminal at a timing determined based on the calculated terminal-specific TA value and the common TA value derived from the second information.

Here, an uplink signal/channel may include a PUSCH/SRS/PUCCH/PRACH, etc. For example, in the case of a PUSCH, the control information may correspond to DCI for scheduling the PUSCH, and in case of an SRS, the control information may correspond to DCI triggering transmission of the SRS (for aperiodic SRS transmission), and in case of a PUCCH, the control information may correspond to, for example, DCI scheduling a PDSCH.

In addition, when uplink transmission corresponds to a first message transmission for a random access procedure, the step of transmitting and receiving the control information may be omitted.

In this case, the first message for the random access procedure may correspond to MSG1 (i.e., a PRACH or a random access preamble transmitted in a PRACH) and/or MSG3 (i.e., a PDSCH scheduled by random access response UL grant) in case of a 4-step random access procedure (see FIG. 10), and may correspond to MSGA (i.e., a PRACH carrying a random access preamble and a PUSCH) in case of a two-step random access procedure (see FIG. 11).

In addition, when an uplink transmission corresponds to transmission of a first message for a random access procedure, a terminal receives a second message for a random access procedure from a base station in response to a first message. Thereafter, in case of a 4-step random access procedure, as illustrated in FIG. 10, transmission/reception of MSG3 and MSG4 may be performed.

Here, a second message for a random access procedure may correspond to MSG2 (i.e., a PDCCH and a PDSCH for random access response) and/or MSG4 (i.e., a PDSCH for contention resolution) in case of a 4-step random access procedure (see FIG. 10), and may correspond to MSGB (i.e., a PUSCH scheduled by a random access response UL grant and a PDSCH for contention resolution) in case of a two-step random access procedure (see FIG. 11).

General Device to which the Present Disclosure may be applied

FIG. 14 is a diagram which illustrates a block diagram of a wireless communication device according to an embodiment of the present disclosure.

In reference to FIG. 14, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method of performing a random access procedure in a wireless communication system, the method performed by a terminal comprising:

   receiving, from a base station, configuration information for providing information needed for the terminal to access the wireless communication system via a non-terrestrial network (NTN) including a satellite, wherein the configuration information includes first information for adjusting an orbit of the satellite and second information on common timing advance (TA);
   determining a terminal-specific TA value for the terminal based on a location of the terminal and the configuration information; and
   transmitting, to the base station, a first message for the random access procedure at a timing determined based on the terminal-specific TA value and a common TA value derived from the second information.

2. The method of claim 1, wherein based on orbit information for the satellite being provided to the terminal in a format of a position vector and a velocity vector, the first information includes a drift rate of a three-dimensional position value and/or a three-dimensional velocity value for the satellite.

3. The method of claim 2, wherein based on orbit information for the satellite being provided to the terminal in a format of a position vector and a velocity vector, the first information includes a drift rate variation of a three-dimensional position value and/or a three-dimensional velocity value for the satellite.

4. The method of claim 1, wherein based on orbit information for the satellite being provided to the terminal in a format of one or more orbit parameters, the first information includes a drift rate of at least one of a semi-major axis, an eccentricity, an argument of periapsis, a longitude of ascending node, an inclination, a mean anomaly.

5. The method of claim 1, wherein based on orbit information for the satellite being provided to the terminal in a format of one or more orbit parameters, the first information includes a drift rate variation of at least one of a semi-major axis, an eccentricity, an argument of periapsis, a longitude of ascending node, an inclination, a mean anomaly.

6. The method of claim 1, further comprising:

   transmitting, to the base station, location information of the terminal and/or a satellite orbit value calculated by the terminal,
   wherein the first information is derived based on the location information of the terminal and/or the satellite orbit value.

7. The method of claim 6, wherein the location information of the terminal includes at least one of the terminal-specific TA value and the common TA value.

8. A terminal of performing a random access procedure in a wireless communication system, the terminal comprising:

   at least one transceiver for transmitting and receiving a wireless signal; and
   at least one processor for controlling the at least one transceiver,
   wherein the at least one processor configured to:

   receive, from a base station, configuration information for providing information needed for the terminal to access the wireless communication system via a non-terrestrial network (NTN) including a satellite, wherein the configuration information includes first information for adjusting an orbit of the satellite and second information on common timing advance (TA);
   determine a terminal-specific TA value for the terminal based on a location of the terminal and the configuration information; and
   transmit, to the base station, a first message for the random access procedure at a timing determined based on the terminal-specific TA value and a common TA value derived from the second information.

9. A base station of performing a random access procedure in a wireless communication system, the base station comprising:

   at least one transceiver for transmitting and receiving a wireless signal; and
   at least one processor for controlling the at least one transceiver,
   wherein the at least one processor configured to:

   transmit, to a terminal, configuration information for providing information needed for the terminal to access the wireless communication system via a non-terrestrial network (NTN) including a satellite, wherein the configuration information includes first information for adjusting an orbit of the satellite and second information on common timing advance (TA); and
   receive, from the terminal, a first message for the random access procedure at a timing determined based on a terminal-specific TA value and a common TA value derived from the second information,
   wherein the terminal-specific TA value is determined by the terminal based on a location of the terminal and the configuration information.

FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

## FIG.4

# FIG.5

Resource grid

A carrier (up to 3300 subcarriers,i,e.,275 RBs)

A BWP

1 RB=12 subcarrier

1 RE

1 subcarrier

1 Symbol

l=0  ·····

k=0

FIG.6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601

S602

S603

S604

S605

S606

S607

S608

· DL/UL ACK/NACK
· UE CQI/PMI RI REPORT
  USING PUSCH AND PUCCH

FIG.7

EP 4 213 410 A1

Handheld or IoT device

Bent pipe Satellite
(=RF repeater)

gNB

5G Core
network

Data
network

NR radio
protocols

NR radio
protocols

NG(=N2/N3)

N6

Handheld or IoT device

Regenerative Satellite
(Including gNB/DU)

gNB/CU

5G Core
network

Data
network

NR radio
protocols

F1 interface

NG(=N2/N3)

N6

# FIG.8

410

420

Gateway

430

| 5G RAN |

| 5G CN |

(a)

410

| 5G RAN |

420

Gateway

| 5G CN |

(b)

## FIG.9

- Common TA(Tcom) = $2*D_0/c$
- UE specific differential TA for xth UE (T$_{UEx}$) = $2*(D_{1x}-D_0)/c$
- Full TA(Tfull) = Tcom + T$_{UEx}$

(a) Regenerative payload

- Common TA(Tcom) = $2*(D_{01}+D_{02})/c$
- UE specific differential TA for xth UE (T$_{UEx}$) = $2*(D_{1x}-D_{01})/c$
- Full TA(Tfull) = Tcom + T$_{UEx}$

(b)Transparent payload

## FIG.10

UE                  BS

① Random access preamble →

← Random access response ②

③ Scheduled transmission →

← Contention resolution ④

(a)

UE                  BS

⓪ ← Random access preamble allocation

① Random access preamble →

② ← Random access response

(b)

# FIG.11

UE       BS

MsgA

Random access preamble

PUSCH part

MsgB

(a)

UE       BS

Random access preamble allocation

MsgA

Random access preamble

PUSCH part

MsgB

(b)

# FIG.12

Celestial body

True anomaly(1207)

Longitude of
ascending node(1205)

Reference
direction

$r$

$\nu$

$\omega$

$\Omega$

Argument of periapsis(1203)

$i$

Inclination(1206)

Plane of reference(1201)

Ascending node(1204)

Orbit(1202)

FIG.13

Terminal                                                    Base station

Configuration information related to NTN ⌒─ S1301

Control information ─── S1302

Uplink signal/channel ⌒─ S1303

# FIG.14

```
┌─────────────────────────────────────┐
│  Receive configuration information   │ ～ S1401
│           related to NTN             │
└─────────────────────────────────────┘
                    │
                    ▼
┌ ─ ─ ─ ─ ─ ─ ─ ─ ─ ─ ─ ─ ─ ─ ─ ─ ─ ─ ┐
│      Receive control information     │ ～ S1402
└ ─ ─ ─ ─ ─ ─ ─ ─ ─ ─ ─ ─ ─ ─ ─ ─ ─ ─ ┘
                    │
                    ▼
┌─────────────────────────────────────┐
│     Transmit uplink signal/channel   │ ～ S1403
└─────────────────────────────────────┘
```

## FIG.15

```
┌─────────────────────────────────────┐
│ Transmit configuration information   │ ──── S1501
│           related to NTN             │
└─────────────────────────────────────┘
                    │
                    ▼
┌ ─ ─ ─ ─ ─ ─ ─ ─ ─ ─ ─ ─ ─ ─ ─ ─ ─ ┐
    Transmit control information       ──── S1502
└ ─ ─ ─ ─ ─ ─ ─ ─ ─ ─ ─ ─ ─ ─ ─ ─ ─ ┘
                    │
                    ▼
┌─────────────────────────────────────┐
│     Receive uplink signal/channel    │ ──── S1503
└─────────────────────────────────────┘
```

# FIG.16

EP 4 213 410 A1

Europäisches Patentamt

European Patent Office

Office européen des brevets

**EUROPEAN SEARCH REPORT**

Application Number

EP 22 20 3261

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NOKIA ET AL: "Remaining time and frequency synchronization aspects for NR over NTN", 3GPP DRAFT; R1-2110900, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20211111 – 20211119 5 November 2021 (2021-11-05), XP052074084, Retrieved from the Internet: URL:https://ftp.3gpp.org/tsg_ran/WG1_RL1/TSGR1_107-e/Docs/R1-2110900.zip R1-2110900.docx [retrieved on 2021-11-05] * section 1-7; figures 1-7 * | 1-9 | INV. H04B7/185 H04W56/00 H04W74/08 |
| X | MODERATOR (THALES): "FL Summary #4 on enhancements on UL time and frequency synchronization for NR NTN", 3GPP DRAFT; R1-2111127, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20211111 – 20211119 20 November 2021 (2021-11-20), XP052097714, Retrieved from the Internet: URL:https://ftp.3gpp.org/tsg_ran/WG1_RL1/TSGR1_107-e/Docs/R1-2111127.zip R1-2111127.docx [retrieved on 2021-11-20] * sections 1-3, 7, 12-14, 16 * | 1-9 | TECHNICAL FIELDS SEARCHED (IPC) H04B H04W |

The present search report has been drawn up for all claims

| Place of search | Date of completion of the search | Examiner |
|---|---|---|
| The Hague | 4 May 2023 | Nilsson, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)